# EUROPÄISCHE PATENTANMELDUNG

(11) **EP 2 400 196 A2**
(43) Veröffentlichungstag der Anmeldung: **28.12.2011**
(21) Anmeldenummer: 11004813.9
(22) Anmeldetag: 11.06.2011
(51) Int. Cl.: F16L 1/036, F16L 37/244, H02G 9/06

(54) **Leitungselement**

(30) Priorität: 25.06.2010 DE 202010009515 U
(71) Anmelder: Rehau AG & Co, 95111 Rehau (DE)
(72) Erfinder: Sieber, Jürgen, 91074 Herzogenaurach (DE)

(57) **Zusammenfassung**

Die Erfindung betrifft ein Leitungselement (10) für eine im Erdreich zu verlegende Leitung, mit wenigstens einem Endabschnitt (14), der mit einem benachbarten Leitungselement (12) verbindbar ist, und sich dadurch auszeichnet, dass der Endabschnitt (14) ein erstes Verbindungsmittel (16) aufweist, das mit einem zweiten Verbindungsmittel (18) in Eingriff bringbar ist, das an einem Endabschnitt (14) des benachbarten Leitungselements (12) ausgebildet ist. Hierzu ist erfindungsgemäß vorgesehen, dass der Endabschnitt (14) wenigstens abschnittsweise wenigstens eine Rippe an seiner Außenseite entlang des Umfangs aufweist, die mit einer dazu komplementär gestalteten Nut an der Innenseite entlang des Umfangs in Eingriff bringbar ist, das an einem Endabschnitt des benachbarten Leitungselements (12) ausgebildet ist.

## Beschreibung

Die vorliegende Erfindung betrifft ein Leitungselement für eine im Erdreich zu verlegende Leitung.

Bekannte Leitungen, die für die Verlegung im Erdreich vorgesehen sind, werden in vielen Fällend derart im Erdreich verlegt, dass sie in ein zuvor ausgebildetes Erdloch "eingetrieben" werden. Diese Leitungen bestehen meist zumindest teilweise aus einem Polymermaterial und werden auch Kunststoffvortriebsrohre genannt. Sie können insbesondere als Verlegeleitungen bzw. Aufnahmeleitungen für Gasleitungen oder Strom- und Fernmeldekabel oder dergleichen verwendet werden. Es ist auch bekannt, diese Leitungen als Abwasserleitungen bzw. Abwasserrohre oder auch als Regenwasserleitungen bzw. Regenwasserrohre zu verwenden.

Die Verlegung im Erdreich erfolgt dadurch, dass einzelne Leitungselemente, wie beispielsweise Rohrstücke entsprechend dem geplanten Verlauf bzw. entsprechend dem Verlauf des zuvor ausgebildeten Erdlochs im wesentlichen in Achsrichtung nacheinander in das zuvor ausgebildete Erdloch eingetrieben und zur Ausbildung der Leitung miteinander verbunden werden, wie es beispielweise aus der DE 3402198 A1 für die Ausbildung einer Schutzleitung zum Schutz von im Erdreich verlegten elektrischen Leitungen bekannt ist. Die Verbindung zwischen den einzelnen Leitungselementen ist hierbei meist in Form einer Steckverbindung oder einer Rastverbindung ausgebildet. Weitere bekannte typische Leitungselemente zur Ausbildung von im Erdreich zu verlegenden Leitungen sind unter anderem aus der EP 1 375 114 A2, der EP 1 705 418 A2, der DE 200 17 639 U1, der DE 195 36 703 A1 und der DE 101 39 984 A1 bekannt.

Einer wirksamen Abdichtung der Verbindungen zwischen den einzelnen Rohrelementen durch Dichtungen bzw. Dichtelemente sind ferner infolge der Rohrgeometrie Grenzen gesetzt, da die Dichtungen auf Grund der Rohrgeometrie nur sehr flach mit einer stark begrenzten Verpressung eingebaut werden können.

Wenn die Rohrelemente in bekannter Weise zum Verbinden rastend ineinander geschoben werden, ist es möglich, dass vorgesehene Dichtungen durch den meist schwergängigen Rastvorgang verschoben oder beschädigt werden. Die Wiederherstellung der Dichtigkeit gestaltet sich dann in der Regel recht schwierig, da einmal eingerastete Verbindungen zwischen Rohrelementen aus Polymermaterial, insbesondere nach längerer Zeit, nur schwer oder schlechtestenfalls gar nicht mehr lösbar sind. Ferner können die durch rastendes Einschieben bzw. Aufschieben zu verbindenden Endabschnitte der Rohrelemente durch die Aufweitung beim Steckvorgang bzw. Rastvorgang klaffen und/oder sich plastisch verformen, einhergehend mit einer Undichtigkeit der jeweiligen Verbindung.

Unter Rasten wird in diesem Zusammenhang die Schaffung einer Verbindung verstanden, die darauf beruht, dass ein Rohrelement mit einer abschnittsweise vorliegenden Umfangserweiterung (bsplw. in Form eines umlaufenden Wulstes oder einer umlaufenden Rippe) in ein Rohrelement geschoben wird, das seinerseits einen am Innenumfang umlaufenden Wulst oder eine entsprechende Rippe oder eine entsprechende Nut aufweist. Beim Ineinanderschieben erfolgt eine - teilsweise erhebliche - kurzzeitige elastische radiale Verformung eines oder beider Rohrelemente, wenn die genannten Rastmittel übereinander hinweg bewegt werden. Der Rastvorgang ist beendet und das Rasten ist erfolgt, wenn die beiden Rohrelemente eine Endposition einnehmen, bei der ein Herausschieben verhindert wird.

Bekannte ungerastete Verbindungen zwischen den Rohrelementen sind zwar meist leichter lösbar, jedoch sehr flexibel und nicht sehr zugfest und damit recht anfällig für Undichtigkeiten. Schließlich können die einzelnen Rohrelemente beim Vortrieb in das Erdreich bzw. in das zuvor ausgebildete Erdloch durch Steine oder ähnlichem vorgeschädigt werden und dann unter Dauerbelastung versagen.

Die meist recht flexiblen Verbindungen zwischen den bekannten Leitungselementen sind insbesondere bei stark gekrümmten Leitungen bzw. stark gekrümmten vorgeformten Erdlöchern hohen Beanspruchungen ausgesetzt. Die Verbindungen neigen daher insbesondere bei Abwinkelung und starker Verformung zur Undichtigkeit, so dass Feuchtigkeit bzw. Flüssigkeit aus dem Erdreich in die Leitung bzw. Innenvolumina der Leitungselemente dringen kann. Dies ist insbesondere problematisch, wenn die Leitung für die Aufnahme von stromführenden Kabeln vorgesehen ist. Dieses Eindringen von Feuchtigkeit bzw. Flüssigkeit, wie z.B. Abwasser aus der Umgebung bzw. der Umwelt in die Leitung bzw. Innenvolumina der Rohrelemente wird auch als Infiltration bezeichnet. Die durch Infiltration eindringende Flüssigkeit kann beispielsweise kontaminiert sein und so z.B. eine Korrosion an in der Leitung angeordneten bzw. aufgenommenen stromführenden Kabeln hervorrufen.

Ein Austreten von Flüssigkeit aus einer im Erdreich verlegten Leitung hingegen wird als Exfiltration bezeichnet und betrifft die Anwendungsfälle, wo die Leitung z.B. als Abwasserleitung oder Regenwasserleitung, also für die Durchströmung mit einer Flüssigkeit in Form des sogenannten Fremdwassers oder allgemein einem Fluid vorgesehen ist. Bei einer Exfiltration infolge einer Undichtigkeit kann z.B. eine Verseuchung des Erdreichs auftreten, wenn z.B. infolge der Exfiltration Abwasser aus industriellen Prozessen aus der Leitung ins Erdreich tritt.

So ist es möglich, dass vorgesehene Dichtungen beim Verbinden der Leitungselemente verschoben oder beschädigt werden. Die Wiederherstellung der Dichtigkeit gestaltet sich dann in der Regel recht schwierig. Schließlich können die einzelnen Leitungselemente beim Vortrieb in das Erdreich bzw. in das zuvor ausgebildete Erdloch durch Steine oder ähnlichem vorgeschädigt werden und dann unter Dauerbelastung versagen.

### Zugrundeliegende Aufgabe

Der vorliegenden Erfindung liegt daher die Aufgabe zugrunde, ein Leitungselement für eine im Erdreich zu verlegende Leitung anzugeben, mit dem es durch Verbinden mit weiteren Leitungselementen möglich ist, eine in einem Erdreich verlegte Leitung herzustellen, die in einfacher Weise miteinander verbunden und auch wieder voneinander gelöst werden können und bei welcher das Risiko für eine Undichtigkeit im Vergleich zu bekannten Lösungen deutlich reduziert ist.

### Erfindungsgemäße Lösung

Diese Aufgabe wird erfindungsgemäß mit einem Leitungselement für eine im Erdreich zu verlegende Leitung gelöst, wobei das Leitungselement wenigstens einen Endabschnitt aufweist, der mit einem benachbarten Leitungselement verbindbar ist, und sich dadurch auszeichnet, dass der Endabschnitt ein erstes Verbindungsmittel aufweist, das mit einem zweiten Verbindungsmittel in Eingriff bringbar ist, das an einem Endabschnitt des benachbarten Leitungselements ausgebildet ist.

Erfindungsgemäß weist der Endabschnitt wenigstens abschnittsweise wenigstens eine Rippe an seiner Außenseite entlang des Umfangs auf, die mit einer dazu komplementär gestalteten Nut an der Innenseite entlang des Umfangs in Eingriff bringbar ist, das an einem Endabschnitt des benachbarten Leitungselements ausgebildet ist.

Besonders günstig ist es, wenn der Endabschnitt zur Herstellung einer Rastverbindung rastend in einen Endabschnitt des benachbarten Leitungselements festlegbar ist.

Von besonderem Vorteil ist bei der vorliegenden Erfindung, wenn an dem Endabschnitt wenigstens eine Hauptdichtung und wenigstens eine Sicherheitsdichtung angeordnet sind, wobei die Hauptdichtung dafür vorgesehen ist, die Verbindung zu dem benachbarten Leitungselement gegen eindringende Flüssigkeit abzudichten, und wobei die Sicherheitsdichtung durch Kontakt mit Flüssigkeit aktivierbar und dafür vorgesehen ist, die Dichtigkeit der Verbindung bei bestehender Undichtigkeit wiederherzustellen.

Erfindungsgemäß ist zusätzlich zu der wenigstens einen Hauptdichtung, die dafür vorgesehen ist, die Verbindung zu dem benachbarten Leitungselement gegen eindringende Flüssigkeit abzudichten, wenigstens eine Sicherheitsdichtung vorgesehen, welche bei bestehender Undichtigkeit die Dichtigkeit wiederherstellt. Hierzu ist die Sicherheitsdichtung durch Kontakt mit Flüssigkeit aktivierbar, wobei die Sicherheitsdichtung bevorzugt teilweise oder zur Gänze aus einem quellfähigen Material besteht. Durch die Verwendung eines quellfähigen Materials, das insbesondere ein quellfähiges Elastomer bzw. ein thermoplastischer Elastomer-Verbund sein kann (wie z.B. Q-TEC bekannt von AWADOCK) kann die Dichtigkeit wieder hergestellt werden. Das quellfähige Material quillt bei Berührung mit Flüssigkeit auf, wobei durch dieses Aufquellen die Dichtigkeit wieder herstellbar ist. Quellvolumen, Quelldruck und Quellbeginn sind vorzugsweise einstellbar. Eine Sicherheitsdichtung, welche teilweise oder zur Gänze aus einem quellfähigen Material besteht, passt sich durch ihre Volumenvergrößerung und Flexibilität nahezu jeder beliebigen Form an und kann somit Undichtigkeiten abdichten.

Das Leitungselement besteht vorzugsweise aus einem Polymermaterial, wobei das Polymermaterial vorzugsweise ein ungefülltes Polypropylen sein kann.

Die Flüssigkeit, welche bei bestehender Undichtigkeit ohne die Sicherheitsdichtung in das Leitungselement bzw. in das Innenvolumen des Leitungselements eindringen würde, ist insbesondere Wasser bzw. Feuchtigkeit aus dem Erdreich. Diese Flüssigkeit kann insbesondere infolge eines Versagens der Hauptdichtung bzw. infolge einer Undichtigkeit der Hauptdichtung zu der Sicherheitsdichtung durchdringen und diese zur Wiederherstellung der Dichtigkeit aktivieren.

Ein Versagen bzw. eine Undichtigkeit der Hauptdichtung kann die Folge eines Verrutschens oder einer Beschädigung der Hauptdichtung sein, wobei sich das Verrutschen oder die Beschädigung insbesondere während des Verbindens der Leitungselemente zur Herstellung einer im Erdreich verlegten Leitung ereignen kann, wobei die Verbindung beispielsweise derart erfolgen kann, dass der Endabschnitt, an dem die Hauptdichtung und die Sicherheitsdichtung angeordnet sind, in einen Endabschnitt des benachbarten Leitungselements eingesteckt oder auf diesen aufgesteckt wird.

Die Hauptdichtung kann bevorzugt teilweise oder zur Gänze aus EPDM (Abk. für Ethylen-Propylen-Dien-Kautschuk) oder NBR (Abk. für Nitrilkautschuk) oder SBR (Abk. für StyrolButadien-Kautschuk) oder einem TPE (Abk. für thermoplastisches Elastomer) bestehen.

Die Hauptdichtung kann bevorzugt in Form einer O-Ring-Dichtung oder in Form einer Lippendichtung ausgebildet sein. Auch die Sicherheitsdichtung kann bevorzugt in Form einer O-Ring-Dichtung oder in Form einer Lippendichtung ausgebildet sein. Sowohl die O-Ring-Dichtung als auch die Lippendichtung sind praktische und wirksame Dichtungs-Formen. Alternativ können die Sicherheitsdichtung und die Hauptdichtung jede beliebige Querschnittsform aufweisen, welche eingerichtet ist, eine hinreichende bzw. wirksame Dichtwirkung bereitzustellen.

Selbst bei größter Sorgfalt bei der Herstellung bzw. Verlegung der jeweiligen Leitung im Erdreich kann jedoch ein Verrutschen bzw. eine Beschädigung der Hauptdichtung nie völlig ausgeschlossen werden, insbesondere wenn die einzelnen Leitungselemente entsprechend dem geplanten Verlauf bzw. entsprechend dem Verlauf des zuvor ausgebildeten Erdlochs beim "Eintreiben" in das Erdreich hohen mechanischen Belastungen, insbesondere mit Komponenten rechtwinkelig zur Längsachse des Leitungselements, ausgesetzt werden. Insofern kann durch das Vorsehen der Sicherheitsdichtung das Risiko für eine Undichtigkeit an der fertig hergestellten und verlegten Leitung im Unterschied zu bekannten Lösungen deutlich bzw. in hohem Maße reduziert werden.

Bei einer praktischen Ausführungsform weist das Leitungselement zwei entgegengesetzte Endabschnitte auf, wobei jeder Endabschnitt mit einem jeweiligen benachbarten Leitungselement verbindbar ist. Bevorzugt ist das Leitungselement bei dieser praktischen Ausführungsform geradlinig ausgebildet. Ferner kann das Leitungselement auch in Form Rohrelements bzw. Rohrs ausgebildet sein. Insbesondere kann das Leitungselement auch in Form eines geradlinigen Rohrelements bzw. Rohrs ausgebildet sind.

Bei einer weiteren praktischen Ausführungsform weist der Endabschnitt Rippen auf, die mit Nuten in Eingriff bringbar sind, die an einem Endabschnitt des benachbarten Leitungselements ausgebildet sind. Alternativ kann der Endabschnitt Nuten aufweisen, die mit Rippen in Eingriff bringbar sind, die an einem Endabschnitt des benachbarten Leitungselements ausgebildet sind.

Mittels der vorgesehenen Rippen bzw. Nuten können die Leitungselemente auf praktische und einfache Weise zur Herstellung bzw. Bildung einer im Erdreich verlegten Leitung über eine Steck- und Drehverbindung miteinander verbunden werden. Durch die Rippen-Nutverbindung entsteht eine steife, lösbare, zug- und druckfeste Verbindung zwischen den Leitungselementen, welche geeignet ist, eine ungewollte Abwinkelung und Verformung, wie sie z.B. beim Auftreten auf ein Hindernis während des "Eintreibens" des Leitungselements bzw. der Leitung in das Erdreich entstehen können, weitestgehend zu vermeiden. Somit wird die Hauptdichtung nur geringfügig belastet. Insbesondere kann die Verbindung mit geringem gleichmäßigem Kraftaufwand erfolgen, so dass ein Verschieben oder Abreißen der Hauptdichtung nur selten auftritt. Sollte dies dennoch auftreten, dient die Sicherheitsdichtung der Wiederherstellung der Dichtigkeit.

Bei einer bevorzugten Ausführungsform ist der Endabschnitt zur Herstellung einer Rastverbindung rastend in einen Endabschnitt des benachbarten Leitungselements einschiebbar. Unter Rasten wird im Rahmen der vorliegenden Erfindung hierbei folgendes verstanden: Erfindungsgemäß ist hierzu eine axiale Rippe vorgesehen, die auf der Außenfläche des Endabschnitts eines Leitungselements angeordnet ist, die mit einer axialen Nut auf der Innenfläche des Endabschnitts eines benachbarten Leitungselements zusammenwirken kann. Es ist möglich, durch eine Drehbewegung die axiale Rippe mit der axialen Nut in Eingriff zu bringen und die Leitungselemente zu verrasten. Die plastische Verformung der Rohrelemente in radialer Richtung ist hierbei minimiert.

Durch die Rastverbindung entsteht eine zug- und druckfeste Verbindung zwischen den Leitungselementen, welche geeignet ist, eine ungewollte Abwinkelung und Verformung, wie sie z.B. beim Auftreten auf ein Hindernis während des "Eintreibens" des Leitungselements bzw. der Leitung in das Erdreich entstehen können, weitestgehend zu vermeiden. Somit wird die Hauptdichtung nur geringfügig belastet. Die Verrastung kann mit sehr geringem Kraftaufwand erfolgen, so dass auch hier ein Verschieben oder Abreißen der Hauptdichtung nur selten auftritt. Sollte dies dennoch auftreten, dient die Sicherheitsdichtung der Wiederherstellung der Dichtigkeit. Auf diese Weise kann eine sehr wirksame zug- und druckfeste Rastverbindung geschaffen werden.

Bei einer alternativen Ausführungsform ist der Endabschnitt rastend auf einen Endabschnitt des benachbarten Leitungselements aufschiebbar.

In einer günstigen Weiterentwicklung der Erfindung ist an der Außenfläche des Endabschnitts wenigstens ein Anschlag ausgebildet ist, der die Rastbewegung begrenzt.

Auf diese Weise ist besonders sicher eine Endstellung erreichbar, die eine ordnungsgemä-βe Verrastung ermöglicht.

In einer sehr bevorzugten Ausführungsform der Erfindung ist an wenigstens einer Außenwandung des Leitungselements wenigstens eine Markierung angebracht.

Diese dient dazu, die Leitungselemente vor dem Zusammenstecken auszurichten, so dass die beiden Leitungselemente leicht zusammensteckbar sind, wobei die Rippen entlang der Aussparungen zwischen den Nuten hindurchgleiten können, bevor durch eine Drehbewegung eine Verrastung der Leitungselemente erfolgt.

Auch für das Anzeigen der erforderlichen durchzuführenden Drehbewegung kann wenigstens eine Markierung an wenigstens einer Außenwandung des Leitungselements angebracht sein.

Es ist damit möglich, die Leitungselemente besonders schnell und sicher zu verbinden und die Verrastung sicher durchzuführen.

Bei einer bevorzugten Ausführungsform ist an einer Innenwandung des Leitungselements wenigstens ein Identifikationselement angebracht. Das Identifikationselement ist vorzugsweise aus dem Innenvolumen des Leitungselements heraus nachweisbar, wobei das Innenvolumen von der Innenwandung des Leitungselements begrenzt ist. Das Identifikationselement ist mit Daten bzw. Informationen versehen, die vorzugsweise das Leitungselement bzw. die im Erdreich verlegte Leitung betreffen, also Daten bzw. Informationen wie Seriennummern, Werkstoffangaben, durch Normen bzw. Gesetze geforderte Daten, Herstellerangaben, Herstellungsdatum, Rohrtyp, Rohrmaterial usw. Die Daten bzw. Informationen können in Form von Schriftzeichen bzw. symbolischen Zeichen vorliegen. Die Daten bzw. Informationen sind durch Verwendung von in das Innenvolumen des Leitungselements bzw. in das Innenvolumen der verlegten Leitung einbringbaren Kontrollvorrichtungen - wie beispielsweise Kameras für die Leitungsinspektion - erfassbar, so dass sie einem Anwender zu Verfügung gestellt werden können. In der Praxis spricht man hier auch von einer Kanal-TV-Befahrung. Besonders bevorzugt ist das Identifikationselement in Form eines RFID-Chips ausgebildet. Mit einem RFID-Chip lassen auf dem RFID-Chip abgespeicherte Daten, die vorzugsweise Daten sind, die dem Leitungselement bzw. der im Erdreich verlegten Leitung zugeordnet sind, drahtlos auslesen, so dass auf den Einsatz von Kontrollvorrichtungen, wie Kameras für die Leitungsinspektion, verzichtet werden kann.

Bei einer praktischen Ausführungsform ist das Leitungselement mit einer verschleißfesten Außenschicht versehen. Die verschleißfeste Außenschicht verhindert eine Beschädigung des Leitungselements, vorzugsweise eine Beschädigung einer tragenden Innenschicht des Leitungselements, auf welcher die Außenschicht vorzugsweise aufgebracht ist, einhergehend mit einer zusätzlichen Sicherheit beim Eintreiben bzw. Einbringen des Leitungselements bzw. der Leitung in das Erdreich.

Die Erfindung betrifft ferner eine Leitung zur Verlegung im Erdreich, umfassend wenigstens ein erfindungsgemäßes Leitungselement, vorzugsweise wenigstens zwei miteinander verbundene erfindungsgemäße Leitungselemente. Zur Verbindung der Leitungselemente werden Endabschnitte der Leitungselemente derart miteinander verbunden, dass die jeweils von einer Innenwandung begrenzten Innenvolumina der Leitungselemente verbunden sind. Insbesondere kann die Leitung zur Verlegung im Erdreich beispielsweise wenigstens 3 und bis zu 10 oder wenigstens 3 und bis 20 verbundene erfindungsgemäße Leitungselementen umfassen, wobei die Anzahl je nach Anwendungsfall variieren kann.

Schließlich betrifft die Erfindung noch ein Leitungssystem, das wenigstens eine Leitung, wie vorstehend beschrieben, aufweist.

### Kurzbeschreibung der Zeichnungen

Nachfolgend werden Ausführungsbeispiele der Erfindung anhand der beigefügten Zeichnungen näher erläutert. Es zeigt:
- Fig. 1: eine teilweise geschnittene schematische Darstellung eines ersten Ausführungsbeispiels eines erfindungsgemäßen Leitungselements,
- Fig. 2: eine teilweise geschnittene schematische Darstellung eines erfindungsgemäßes Leitungselement gemäß einem zweiten Ausführungsbeispiel,
- Fig. 3: einen Schnitt entlang einer Ebene A-A gemäß der Anordnung aus Fig. 1 mit einem Leitungselement gemäß einem zweiten Ausführungsbeispiel,
- Fig. 4a: einen Schnitt entlang einer Ebene B-B gemäß der Anordnung der Fig. 1 mit einem Leitungselement gemäß einem zweiten Ausführungsbeispiel in einem nicht verrasteten Zustand,
- Fig. 4b: einen Schnitt entlang einer Ebene B-B gemäß der Anordnung der Fig. 1 mit einem Leitungselement gemäß einem zweiten Ausführungsbeispiel in einem verrasteten Zustand.

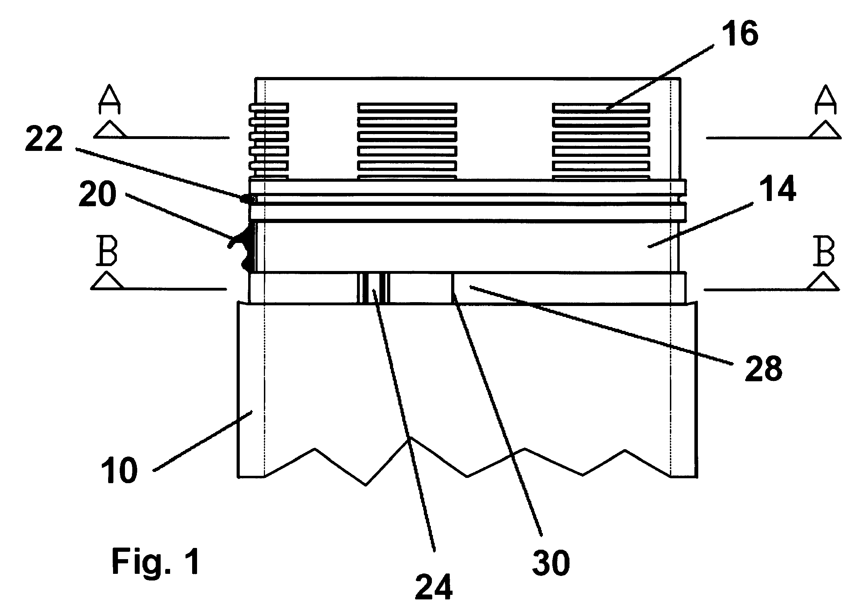

Die Fig. 1 zeigt eine teilweise geschnittene schematische Darstellung eines ersten Ausführungsbeispiels eines erfindungsgemäßen Leitungselements 10.

Das dargestellte Leitungselement 10 für eine im Erdreich zu verlegende Leitung weist einen mit einem nicht gezeigten benachbarten Leitungselement 12 über ein Verbindungsmittel verbindbaren Endabschnitt 14 auf. Hierfür ist der Endabschnitt 14 mit Rippen 16 versehen, die mit Nuten 18 in Eingriff bringbar sind, die an dem Endabschnitt 14 des benachbarten Leitungselements 12 ausgebildet sind. An dem Endabschnitt 14 des Leitungselements 10, das in Form eines Rohrelements bzw. eines Rohres ausgebildet ist, sind eine Hauptdichtung 20 in Form einer Lippendichtung und eine Sicherheitsdichtung 22 aus einem quellfähigen Material angeordnet und in Ringnuten aufgenommen, wobei die Sicherheitsdichtung in Form eines O-Rings ausgebildet ist. Bei bestehender Verbindung zwischen den beiden Leitungselementen 10, 12 ist die Hauptdichtung 20 dafür vorgesehen, die Verbindung gegen eindringende Flüssigkeit, wie z.B. Grundwasser abzudichten. Die Sicherheitsdichtung 22 ist dafür vorgesehen, die Dichtigkeit der Verbindung bei bestehender Undichtigkeit - z. B. infolge eines Verrutschens der Hauptdichtung 20 oder infolge einer Beschädigung an der Hauptdichtung 20 - wiederherzustellen. An der Außenfläche 24 des Endabschnitts 14 ist ein Anschlag 30 ausgebildet ist, der die Rastbewegung begrenzt. Weiterhin ist eine axiale Rippe 24, die auf der Außenfläche 28 des Endabschnitts 14 des Leitungselements 10 angeordnet ist, zur Verrastung vorhanden.

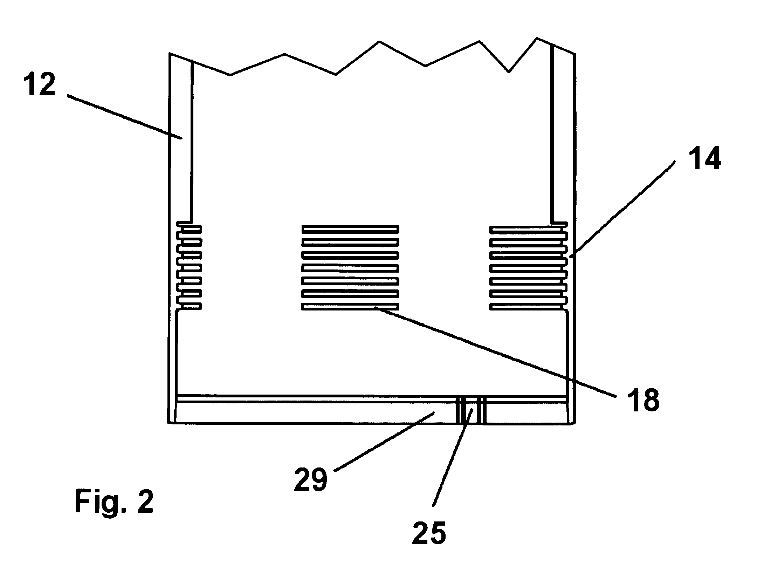

Die Fig. 2 zeigt eine teilweise geschnittene schematische Darstellung eines Leitungselements 12 gemäß einem zweiten Ausführungsbeispiel.

Das in Fig. 2 dargestellte Leitungselement 12 weist einen Endabschnitt 14 auf, der rastend auf einen Endabschnitt 14 des benachbarten Leitungselements 10 aufschiebbar ist, wobei die Rastverbindung mittels Nuten 18 an der Innenfläche 29 des Endabschnitts 14 des Leitungselements 12 realisiert ist.

Bei einer Verbindung der Leitungselemente 10 und 12 können die an der Außenfläche 28 des Endabschnitts 14 des Leitungselements 10, das in Form eines Rohrelements bzw. eines Rohres ausgebildet ist, angeordnete Hauptdichtung 20 in Form einer Kompressionsdichtung, welche wiederum in Form einer Lippendichtung ausgebildet ist, und die Sicherheitsdichtung 22 aus einem quellfähigen Material, die in Form eines O-Rings ausgebildet ist, angeordnet und in Ringnuten aufgenommen sind, an die Innenfläche 29 des Endabschnitts 14 des Leitungselements 12, das in Form eines Rohrelements bzw. eines Rohres ausgebildet ist, abdichtend anliegen. Ähnlich wie bei dem in Fig. 1 dargestellten Ausführungsbeispiel ist die Hauptdichtung 20 dafür vorgesehen, die Verbindung gegen eindringende Flüssigkeit, wie z. B. Grundwasser abzudichten. Die Sicherheitsdichtung 22 ist dafür vorgesehen, die Dichtigkeit der Verbindung bei bestehender Undichtigkeit - z. B. infolge eines Verrutschens der Hauptdichtung 20 oder infolge einer Beschädigung an der Hauptdichtung 20 - wiederherzustellen.

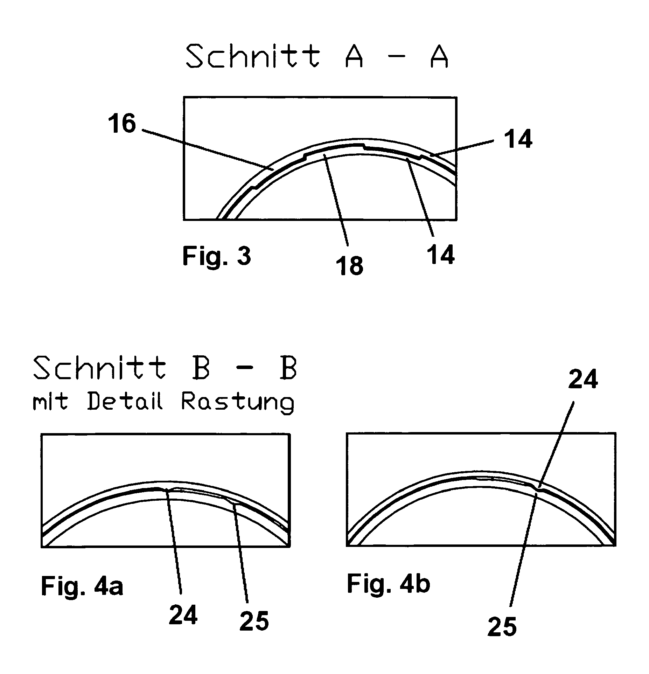

In Fig. 3 ist in einem Schnitt A-A Bezug nehmend auf Fig. 1 und ergänzt um den Endabschnitt 14 des Leitungselements 12 gezeigt, wie die Rippen 16 und die Nuten 18 an den Endabschnitten 14, 14 der Leitungselemente 10, 12 derart zueinander angeordnet sind, dass es möglich ist, die Leitungselemente 10, 12 ineinander zu schieben.

Hierzu sind die Rippen 16 so ausgerichtet, dass sie jeweils entlang der Aussparungen zwischen den Nuten 18 bis zu einer Endstellung hindurchgleiten können, bevor durch eine Drehbewegung eine Verrastung der Leitungselemente 10, 12 erfolgt.

Fig. 4a stellt den unverrasteten Zustand der ineinander geschobenen Leitungselemente 10, 12 in einem Schnitt B-B Bezug nehmend auf Fig. 1, ergänzt um den Endabschnitt 14 des Leitungselements 12, dar. Hierzu ist die axiale Rippe 24, die auf der Außenfläche 28 des Endabschnitts 14 des Leitungselements 10 angeordnet ist, in einer Position, die nicht der axialen Nut 25 auf der Innenfläche 29 des Endabschnitts 14 des Leitungselements 12 gegenüberliegt. Es ist möglich, durch eine Drehbewegung die axiale Rippe 24 mit der axialen Nut 25 in Eingriff zu bringen und die Leitungselemente 10, 12 zu verrasten.

Schließlich ist in Fig. 4b in einem Schnitt B-B Bezug nehmend auf Fig. 1, ergänzt um den Endabschnitt 14 des Leitungselements 12, gezeigt, wie der verrastete Zustand ausgeführt ist. Hierbei nimmt die axiale Rippe 24, die auf der Außenfläche 28 des Endabschnitts 14 des Leitungselements 10 angeordnet ist, eine Position ein, die der axialen Nut 29 auf der Innenfläche 29 des Endabschnitts 14 des Leitungselements 12 gegenüberliegt. Dadurch greift die axiale Rippe 24 in die axiale Nur 29 ein. Die Leitungselemente 10, 12 sind dann miteinander verrastet.

### Bezugszeichenliste:

- 10: Leitungselement
- 12: benachbartes Leitungselement
- 14: Endabschnitt
- 16: Rippe
- 18: Nut
- 20: Hauptdichtung
- 22: Sicherheitsdichtung
- 24: Rippe, axial
- 25: Nut, axial
- 28: Außenfläche
- 29: Innenfläche
- 30: Anschlag

## Patentansprüche

1. Leitungselement (10) für eine im Erdreich zu verlegende Leitung, mit wenigstens einem Endabschnitt (14), der mit einem benachbarten Leitungselement (12) verbindbar ist, **dadurch gekennzeichnet, dass** der Endabschnitt (14) ein erstes Verbindungsmittel (16) aufweist, das mit einem zweiten Verbindungsmittel (18) in Eingriff bringbar ist, das an einem Endabschnitt (14) des benachbarten Leitungselements (12) ausgebildet ist.

2. Leitungselement (10) nach Anspruch 1, **dadurch gekennzeichnet, dass** der Endabschnitt (14) wenigstens abschnittsweise wenigstens eine Rippe an seiner Außenseite entlang des Umfangs aufweist, die mit einer dazu komplementär gestalteten Nut an der Innenseite entlang des Umfangs in Eingriff bringbar ist, das an einem Endabschnitt des benachbarten Leitungselements (12) ausgebildet ist.

3. Leitungselement (10) nach Anspruch 1 oder 2, **dadurch gekennzeichnet, dass** der Endabschnitt (14) zur Herstellung einer Rastverbindung rastend in einen Endabschnitt (14) des benachbarten Leitungselements (12) festlegbar ist.

4. Leitungselement (10) nach einem der vorangehenden Ansprüche, **dadurch gekennzeichnet, dass** an dem Endabschnitt (14) wenigstens eine Hauptdichtung (20) und wenigstens eine Sicherheitsdichtung (22) angeordnet sind, wobei die Hauptdichtung (20) dafür vorgesehen ist, die Verbindung zu dem benachbarten Leitungselement (12) gegen eindringende Flüssigkeit abzudichten, und wobei die Sicherheitsdichtung (22) durch Kontakt mit Flüssigkeit aktivierbar und dafür vorgesehen ist, die Dichtigkeit der Verbindung bei bestehender Undichtigkeit wiederherzustellen.

5. Leitungselement (10) nach Anspruch 4, **dadurch gekennzeichnet, dass** die Sicherheitsdichtung (22) teilweise oder zur Gänze aus einem quellfähigen Material besteht.

6. Leitungselement (10) nach einem der vorangehenden Ansprüche, **dadurch gekennzeichnet, dass** an der Außenfläche (24) des Endabschnitts (14) wenigstens eine Rippe (28) in axialer Richtung ausgebildet ist, die im verrasteten Zustand in eine Nut (29) in axialer Richtung an der Innenfläche (25) des Endabschnitts (14) des Leitungselements (12) eingreift.

7. Leitungselement (10) nach Anspruch 6, **dadurch gekennzeichnet, dass** an der Außenfläche (24) des Endabschnitts (14) wenigstens ein Anschlag (30) ausgebildet ist, der die Rastbewegung begrenzt.

8. Leitungselement (10) nach Anspruch 1, **dadurch gekennzeichnet, dass** der Endabschnitt (14) durch eine Drehbewegung rastend auf einen Endabschnitt (14) des benachbarten Leitungselements (12) festlegbar ist.

9. Leitungselement (10) nach einem der vorangehenden Ansprüche, **dadurch gekennzeichnet, dass** an einer Außenwandung des Leitungselements (10) wenigstens eine Markierung angebracht ist.

10. Leitungselement (10) nach einem der vorangehenden Ansprüche, **dadurch gekennzeichnet, dass** an einer Innenwandung des Leitungselements (10) wenigstens ein Identifikationselement angebracht ist.

11. Leitungselement (10) nach einem der vorangehenden Ansprüche, **dadurch gekennzeichnet, dass** das Leitungselement (10) mit einer verschleißfesten Außenschicht versehen ist.

12. Leitungselement (10) nach einem der vorangehenden Ansprüche, **dadurch gekennzeichnet, dass** das Leitungselement (10) zwei entgegengesetzte Endabschnitte (14) aufweist, wobei jeder Endabschnitt (14) mit einem jeweiligen benachbarten Leitungselement (12) verbindbar ist.

13. Leitung zur Verlegung im Erdreich, umfassend wenigstens ein Leitungselement (10) nach einem der Ansprüche 1 bis 12.

14. Leitung nach Anspruch 13, umfassend wenigstens zwei miteinander verbundene Leitungselemente (10).

15. Leitungssystem aufweisend wenigstens eine Leitung gemäß Anspruch 14.
